# EUROPEAN PATENT SPECIFICATION

(11) **EP 2 320 598 B1**
(45) Date of publication and mention of the grant of the patent: **10.10.2012**
(21) Application number: 09847264.0
(22) Date of filing: 25.12.2009
(51) Int. Cl.: H04Q 11/00, H04L 12/18

(54) **MULTICAST PROCESSING METHOD AND APPARATUS**
MULTICAST-VERARBEITUNGSVERFAHREN UND -VORRICHTUNG
PROCÉDÉ ET APPAREIL DE TRAITEMENT DE DIFFUSION GROUPÉE

(30) Priority: 15.07.2009 CN 200910151992
(43) Date of publication of application: 11.05.2011
(73) Proprietor: ZTE Corporation, Shenzhen, Guangdong 518057 (CN)
(72) Inventor: HE, Yuanling, Guangdong 518057 (CN); LI, Mingsheng, Guangdong 518057 (CN); YUAN, Liquan, Guangdong 518057 (CN)
(74) Representative: Israelsson, Stefan
(86) International application number: PCT/CN2009/076031
(87) International publication number: WO 2011/006339

(56) References cited:
- EP-A1- 2 117 167
- CN-A- 101 399 820
- CN-A- 101 557 338
- JP-A- 2008 187 236
- US-A1- 2005 135 365
- US-A1- 2008 198 857

## Description

### TECHNICAL FIELD

The present invention relates to the technical field of PON, and in particular, to a method and device for multicast processing.

### BACKGROUND

A PON (Passive Optical Network) system is generally composed of an office-side OLT (Optical Line Terminal), a user-side ONU (Optical Network Unit) / ONT (Optical Network Termination), and an ODN (Optical Distribution Network). The ODN comprises single-mode fibers, optical splitters, optical connectors, and other passive optical elements, providing the physical connection between an OLT and an ONU with an optical transmission medium. Generally, the ODN adopts a point-to-multipoint structure, that is to say, an OLT is connected to multiple ONUs through an ODN.

An EPON (Ethernet Passive Optical Network) is a new-generation broadband passive optical integrated access technology based on IEEE (Institute of Electrical and Electronics Engineers) 802.3-2005 Section 5 and IEEE802.3av standards.

For the EPON, the IEEE standards only define the standards of physical layers and link layers of a 1 G-EPON and a 10G-EPON and do not involve other service functions. For multicast, the IEEE802.3-2005 Section 5 standard defines a broadcast logical channel identifier in the 1 G-EPON as 0x7fff; the IEEE802.3av standard defines a broadcast logical channel identifier in the 10G-EPON as 0x7ffe. Usually, when an OLT in the EPON sends multicast traffic, it may send the multicast traffic to all ports under a PON port by using a broadcast logical channel; then, the ONU determines a port to which the multicast traffic will be forwarded according to a locally saved table that illustrates the corresponding relationships between a multicast group and local user interfaces.

The above is mainly aimed at the situation that only the same type of ONUs are connected to a port on the OLT.

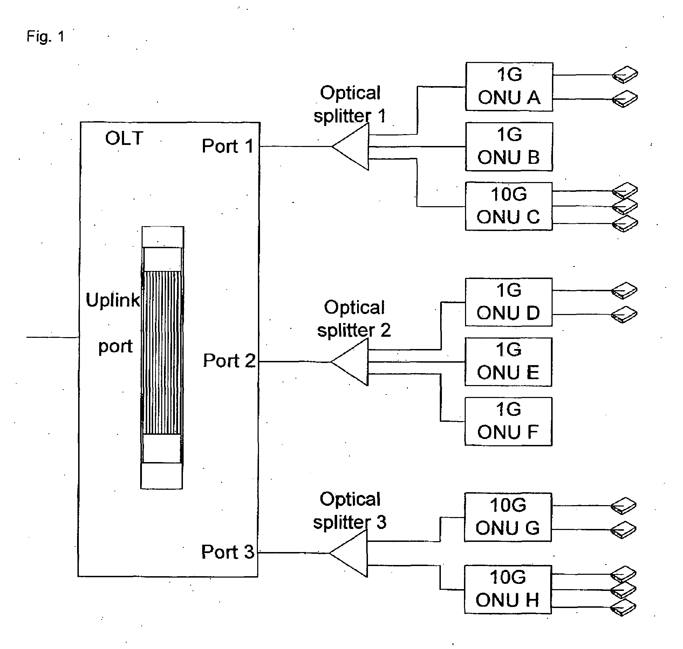

When different types (such as different rates) of ONUs are connected to a port on a same OLT, as shown in Fig. 1, there are three ONUs under optical splitter 1 connected to OLT port 1, wherein ONU A and ONU B are 1G-EPON ONUs, and ONU C is a 10G-EPON ONU. In this case, there are no specifications in existing standards on how an OLT uses a broadcast or multicast logical channel to send multicast messages, therefore, how to efficiently use physical channels in a PON to implement the forwarding of multicast traffic is an urgent problem to be solved.

EP 2 117 167 A1 describes a method to discover Optical Network Units (ONU) with different speed capabilities in an Ethernet Passive Optical Network (EPON) by an Optical Line Termination (OLT), where logical links in the network are identified by Logical Link IDs, and the OLT can transmit and receive data with 1Gbit/s-speed and 10 Gbit/s-speed. The discovery process is handled in the OLT by a Multi Point Control Process (MPCP), which exchanges messages as Data Units (MPCPDU) with the ONUs. This is achieved by extending the standard MPCPDUs in a way that backward compatibility is assured.

### SUMMARY

In view of this, the main object of the present invention is to provide a method and device for multicast processing to realize the multicast processing when different types of ONUs coexist.

In order to achieve the above object, the technical scheme of the present invention is implemented in the following way:

The present invention provides a method for multicast processing, comprising:
replicating multicast data to different broadcast or multicast logical channels according to the ONU types of users who join a multicast group when an OLT, on which a same port is connected to different types of ONUs, replicates downlink multicast data.

The method may further comprise: if there are only the same ONU type of users joining the multicast group under an OLT port that corresponds to the multicast group, then sending the multicast data down to ONUs under the OLT port through a broadcast or multicast logical channel to which this ONU type corresponds.

The method may further comprise: if there are different ONU types of users joining the multicast group under an OLT port to which the multicast group corresponds, then sending the multicast data respectively to ONUs under the OLT port through broadcast or multicast logical channels to which these ONU types each correspond.

The ONU types may be classified by rate.

The method may further comprise: the OLT determines users who join a multicast group and their respective ONU types according to a variety of information entries established.

The information entries may comprise: the corresponding relationships between ONU logical link identifiers and ONU types, the corresponding relationships between ONU logical link identifiers and OLT ports, the corresponding relationships between a multicast group and ONU logical link identifiers, and the corresponding relationships between a multicast group and OLT ports.

The present invention also provides a device for multicast processing, which is applicable for an OLT on which a same port is connected to different types of ONUs, and the device comprises:
a data receiving module, used for receiving multicast data; and
a data replicating module, used for replicating the multicast data to different broadcast or multicast logical channels according to the ONU types of users who join a multicast group when replicating the multicast data.

The data replicating module may be further used for, if there are only the same ONU type of users joining the multicast group under an OLT port that corresponds to the multicast group, sending the multicast data down to ONUs under the OLT port through a broadcast or multicast logical channel to which this ONU type corresponds.

The data replicating module may be further used for, if there are different ONU types of users joining the multicast group under an OLT port that corresponds to the multicast group, sending the multicast data respectively to ONUs under the OLT port through broadcast or multicast logical channels to which these ONU types each correspond.

The ONU types are classified by rate.

The device may further comprise an entry establishing module for establishing information entries; and the data replicating module may be further used for determining users who join a multicast group and their respective ONU types according to the established information entries.

The information entries may comprise: the corresponding relationships between ONU logical link identifiers and ONU types, the corresponding relationships between ONU logical link identifiers and OLT ports, the corresponding relationships between a multicast group and ONU logical link identifiers, and the corresponding relationships between a multicast group and OLT ports.

In the method and device for multicast processing provided by the present invention, an OLT, on which a same port is connected to different types of ONUs, can replicate multicast data to different broadcast or multicast logical channels according to the ONU types of users who join a multicast group when the OLT replicates downlink multicast data. The present invention achieves efficient multicast processing when different types of ONUs coexist, and enables an ONU to distinguish whether the multicast data belongs to an ONU of its type before forwarding the multicast, thereby preventing excessive data from unnecessarily interfering with the ONU, meanwhile, efficiently utilizing the bandwidth between an OLT and an ONU, and avoiding meaningless bandwidth occupation by data streams.

### BRIEF DESCRIPTION OF THE DRAWINGS

Fig. 1 is a schematic diagram illustrating networking when 1G-EPONs and 10G-EPONs coexist according to an existing technology;
Fig. 2 is a flowchart of a method for multicast processing of the present invention;
Fig. 3 is a flowchart of a method for multicast processing in embodiment 1 of the present invention;
Fig. 4 is a flowchart of a method for multicast processing in embodiment 2 of the present invention; and
Fig. 5 is a schematic diagram illustrating the composition and structure of a device for multicast processing of the present invention.

### DETAILED DESCRIPTION

The technical schemes of the present invention are described in detail hereinafter in combination with the accompanying drawings and the embodiments.

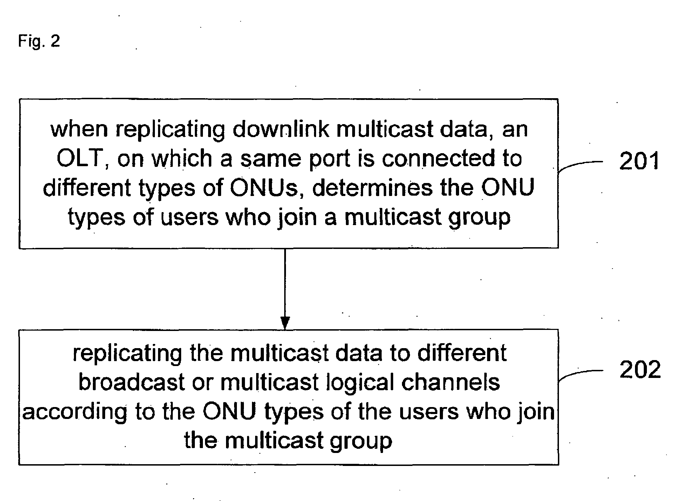

A method for multicast processing provided by the present invention, as shown in Fig. 2, comprises the following steps:
201: the ONU types of users who join a multicast group are determined when an OLT, on which a same port is connected to different types of ONUs, replicates downlink multicast data;
the ONU types may be classified by rate; for example, in an EPON, the ONU types are classified into a 1G-EPON ONU type and a 10G-EPON ONU type by rate. Of course, the present invention is not limited to the classification by rate, and the basis of the classification of the ONU types can be expanded according to actual needs;
202: the OLT replicates the multicast data to different broadcast or multicast logical channels according to the ONU types of the users who join the multicast group;
specifically, if there are only the same ONU type of users joining the multicast group under an OLT port that corresponds to the multicast group, the multicast data is sent down to ONUs under the OLT port through a broadcast or multicast logical channel to which the same ONU type corresponds; if there are different ONU types of users joining the multicast group under an OLT port that corresponds to the multicast group, the multicast data is sent respectively to ONUs under the OLT port through broadcast or multicast logical channels to which these ONU types each correspond.

Based on the above-mentioned method for multicast processing, in practical applications, when the OLT receives multicast data, it can determine the users who join the multicast group and their respective ONU types, as well as the OLT port for sending the multicast data according to various established information entries, thereby determining whether there are different ONU types of users under the OLT port to which the multicast data corresponds.

Preferably, the information entries may comprise: the corresponding relationships between ONU logical link identifiers and ONU types, the corresponding relationships between ONU logical link identifiers and OLT ports, the corresponding relationships between a multicast group and ONU logical link identifiers, and the corresponding relationships between a multicast group and OLT ports and so on. The corresponding relationships between a multicast group and ONU logical link identifiers and the corresponding relationships between a multicast group and OLT ports can be configured through an IGMP (Internet Group Management Protocol) or by a network administrator.

The OLT determines the corresponding multicast group according to the multicast address and related information contained in the multicast data, and searches for the corresponding relationships between the multicast group and OLT ports according to the multicast group to acquire the OLT ports corresponding to the multicast group; then, according to the corresponding relationships between ONU logical link identifiers and ONU types, the corresponding relationships between ONU logical link identifiers and OLT ports, and the corresponding relationships between a multicast group and ONU logical link identifiers, the OLT determines the users who join the multicast group and their respective ONU types, as well as the ONU logical link identifiers; and then the OLT determines whether there are different types of users joining the multicast group under each OLT port. When it is determined that there are only the same ONU type of users joining the multicast group under an OLT port to which the multicast group corresponds, the OLT sends the multicast data down to the ONUs under the OLT port through a broadcast or multicast logical channel to which this ONU type corresponds. When it is determined that there are different ONU types of users joining the multicast group under an OLT port to which the multicast group corresponds, the OLT sends the multicast data respectively to the ONUs under the OLT port through broadcast or multicast logical channels to which these ONU types each correspond

In an example that the ONU types are classified into a 1G-EPON ONU type and a 10G-EPON ONU type, if the OLT determines that there are only users of the 1G-EPON ONU type joining the multicast group under a port, then it sends the multicast data down to ONUs under the OLT port through a broadcast logical channel corresponding to the 1G-EPON ONU type, i.e., sending the multicast data down to the ONUs under the OLT port through a broadcast logical channel marked with 0x7fff; if the OLT determines that there are only users of the 10G-EPON ONU type joining the multicast group under a port, then it sends the multicast data down to the ONUs under the OLT port through a broadcast logical channel corresponding to the 10G-EPON ONU type, i.e., sending the multicast data to the ONUs under the OLT port through a broadcast logical channel marked with 0x7ffe; if the OLT determines that there are both the users of the 1G-EPON ONU type and those of the 10G-EPON ONU type joining the multicast group under a port, then it sends the multicast data respectively through the broadcast logical channel corresponding to the 1 G-EPON ONU type (the broadcast logical channel marked with 0x7fff) and the broadcast logical channel corresponding to the 10G-EPON ONU type (the broadcast logical channel marked with 0x7ffe). Such two sending guarantees that the multicast data can be received by both the 1 G-EPON ONUs and the 10G-EPON ONUs under the OLT port.

The above-mentioned method for multicast processing is further described hereinafter by taking the multicast processing in the EPON as an example. However, the method for multicast processing of the present invention is not limited to the EPON, but also is applicable for other types of PONs.

In the embodiment 1 of the present invention, the implementing method of the IGMP is adopted. Information entries are required to be established in the OLT, comprising two-level multicast entries and other corresponding relationships, wherein the first-level multicast entry is used to determine an OLT port, and the second-level multicast entry is used to determine a broadcast logical channel. The specific operations for the establishment of the multicast entries and other corresponding relationships are as follows:
1. in the OLT, establishing the corresponding relationships between ONU logical link identifiers and ONU types (denoted as corresponding relationships 1) to identify the ONU logical link identifiers that correspond to the 1 G-EPON and the ONU logical link identifiers that correspond to the 10G-EPON;
2. for IGMP dynamic multicast, when an IGMP Report message is received from the ONU, establishing or updating the corresponding relationships between a multicast group and ONU logical link identifiers (denoted as corresponding relationships 2) and the corresponding relationships between a multicast group and OLT ports (denoted as corresponding relationships 3) by the OLT, wherein the corresponding relationships 2 and the corresponding relationships 3 constitute the first-level multicast entry;
3. establishing and updating the corresponding relationships between a multicast group and broadcast logical channel identifiers (denoted as corresponding relationships 4) in each OLT port, according to the above corresponding relationships 1 and the first-level multicast entry (including the corresponding relationships 2 and the corresponding relationships 3), wherein the members of the corresponding relationships 4 can be the broadcast logical channel identifier (0x7fff) corresponding to the 1G-EPON and/or the broadcast logical channel identifier (0x7ffe) corresponding to the 10G-EPON, as shown in Table 1 as follows:

**Table 1**

| | Only 1 G-EPON ONUs | Only 10G-EPON ONUs | 1 G-EPON ONUs and 10G-EPON ONUs coexist | Neither of the two types of ONUs exists |
|---|---|---|---|---|
| Members of Information entries | 0x7fff | 0x7ffe | 0x7fff 0x7ffe | Null |

The corresponding relationships 4 constitute the second-level multicast entry.

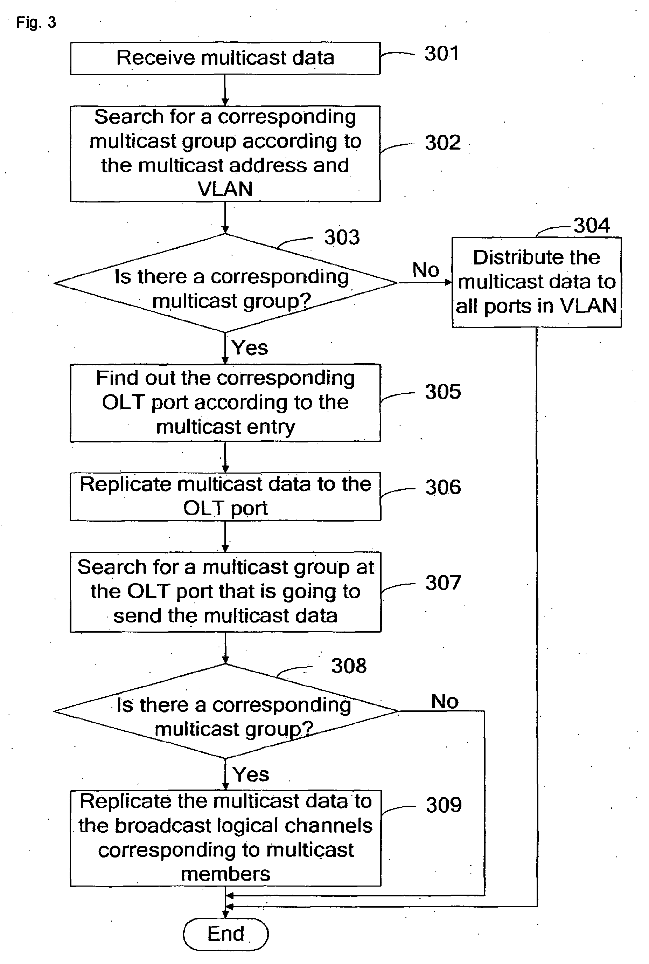

The method for multicast processing implemented on the basis of the above information entries mainly comprises the following steps as shown in Fig. 3:
301: the OLT receives multicast data through its own uplink port;
302 ~ 303: the OLT searches for the multicast group corresponding to the multicast data according to the multicast address and relevant information contained in the multicast data; if the corresponding multicast group is found, step 305 is executed; otherwise, step 304 is executed;
wherein the relevant information includes VLAN or multicast source addresses and so on; by taking the VLAN as an example for illustration in the embodiment 1 of the present invention, the OLT can find the multicast group corresponding to the multicast data either only according to the multicast address or according to the multicast address and the VLAN;
304: if the OLT does not find the multicast group corresponding to the multicast data, the multicast data is distributed to all ports in the VLAN, and the entire process is terminated after the operations are finished;
305 ~ 306: if the OLT finds the multicast group corresponding to the multicast data, it finds an OLT port corresponding to the multicast group according to the established multicast entries and replicates (or sends) the multicast data to the OLT port;
the OLT searches for the corresponding relationships 3 according to the multicast group found out above, and acquires the OLT port corresponding to the multicast group;
307 - 308: the multicast group corresponding to the multicast data is searched for at the OLT port that is to send the multicast data; if there is the corresponding multicast group, then step 309 is executed; otherwise, then the entire process is terminated;
309: at the OLT port, the established multicast entries are searched for according to the multicast group, so as to acquire broadcast logical channels to which multicast members each correspond, and the multicast data is replicated to the broadcast logical channels and sent to the ONUs under the OLT port.

In the embodiment 2 of the present invention, the implementing method of the IGMP is adopted. The first-level multicast entry is required to be established in the OLT and is used to determine an OLT port; in addition, other corresponding relationships are also needed to be established to determine the users who join a multicast group and their respective ONU types. The specific operations for establishing the first-level multicast entry and other corresponding relationships (both belong to the information entries) are as follows:
1. establishing the corresponding relationships between ONU logical link identifiers and ONU types in the OLT (denoted as corresponding relationships 1) to identify the ONU logical link identifiers corresponding to the 1 G-EPON and those corresponding to the 10G-EPON;
2. at the time of ONU registration, establishing the corresponding relationships between OLT ports and ONU logical link identifiers in the OLT (denoted as corresponding relationships 5);
3. for the IGMP dynamic multicast, when an IGMP Report message is received from the ONU, establishing and updating the corresponding relationships between a multicast group and ONU logical link identifiers (denoted as corresponding relationships 2) and the corresponding relationships between a multicast group and OLT ports (denoted as corresponding relationship 3), wherein the corresponding relationships 2 and corresponding relationships 3 constitute the first-level multicast entry described in this embodiment.

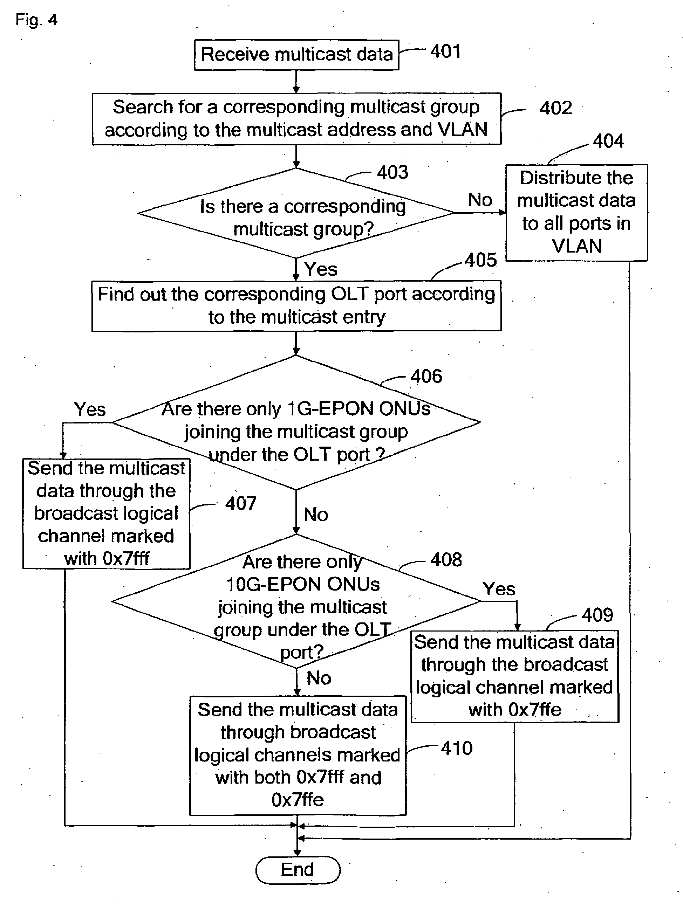

The above-mentioned method for multicast processing implemented on the basis of the above information entries mainly comprises the following steps as shown in Fig. 4:
401: the OLT receives multicast data through its own uplink port;
402 ~ 403: the OLT searches for the multicast group corresponding to the multicast data according to the multicast address and VLAN contained in the multicast data; if the corresponding multicast group is found, then step 405 is executed; otherwise, then step 404 is executed;
404: if the OLT does not find the multicast group corresponding to the multicast data, then the multicast data is distributed to all ports in the VLAN, and the entire process is terminated after the operations are finished;
405: if the OLT finds the multicast group corresponding to the multicast data, then the OLT port corresponding to the multicast group is found out in accordance with the established multicast entries;
406: determining whether there are only 1 G-EPON ONUs joining the multicast group under the OLT port; if so, step 407 is executed; otherwise, step 408 is executed;
finding the logical link identifiers of ONUs that join the multicast group under each OLT port according to the corresponding relationships 5, thus determining whether there are only 1G-EPON ONUs joining the multicast group;
407: if it is determined that there are only 1G-EPON ONUs joining the multicast group under the OLT port, then the multicast data is sent to the ONUs under the OLT port through the broadcast logical channel marked with 0x7fff;
408: determining whether there are only 10G-EPON ONUs joining the multicast group under the OLT port; if so, step 409 is executed; otherwise, step 410 is executed;
finding the logical link identifiers of ONUs that join the multicast group under each OLT port according to the corresponding relationships 5, thus determining whether there are only 10G-EPON ONUs joining the multicast group;
409: if it is determined that there are only 10G-EPON ONUs joining the multicast group under the OLT port, then the multicast data is sent to the ONUs under the OLT port through the broadcast logical channel marked with 0x7ffe;
410: if it is determined that there are both 1G-EPON ONUs and 10G-EPON ONUs joining the multicast group under the OLT port, then the multicast data is sent to the ONUs under the OLT port respectively through the broadcast logical channel marked with 0x7fff and the broadcast logical channel marked with 0x7ffe.

It should be noted that the corresponding relationships between ONU logical link identifiers and ONU types in the OLT can be determined by use of but not limited to the following two methods.

Method 1: Configuring the corresponding relationships based on a value range of ONU logical link identifiers; provided that it is a 1G-EPON ONU if the value of an ONU logical link identifier is in a certain range, and it is a 10G-EPON ONU if the value is in another range;

for example: it is a 1 G-EPON ONU if the value of an ONU logical link identifier is greater than or equal to 0 and smaller than or equal to 64, while it is a 10G-EPON ONU if the value of an ONU logical link identifier is greater than or equal to 65 and smaller than or equal to 511; or, it is a 1G-EPON ONU if the value of an ONU logical link identifier is greater than or equal to 0 and smaller than or equal to 2047, while it is a 10G-EPON ONU if the value of an ONU logical link identifier is greater than or equal to 2048 and smaller than or equal to 4095.

Method 2: Determining the corresponding relationships dynamically according to the system configuration or ONU registration; saving the corresponding relationships between ONU logical link identifiers and ONU types in the OLT, marking the ONU logical link identifiers that are corresponding to the 1G-EPON ONU and those corresponding to the 10G-EPON ONU, and performing update or manual configuration at the time of ONU registration.

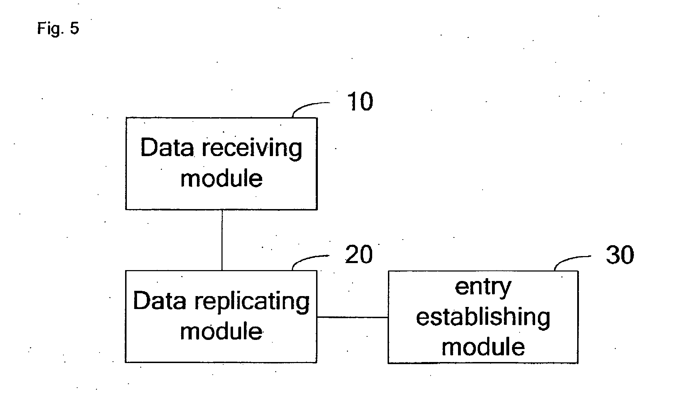

In order to implement the above-mentioned method for multicast processing, the present invention also provides a device for multicast processing, which is applied to an OLT on which a same port is connected to different types of ONUs, as shown in Fig. 5. The device comprises: a data receiving module 10 and a data replicating module 20. The data receiving module 10 is used to receive multicast data. The data replicating module 20 is used to replicate the multicast data to several different broadcast or multicast logical channels according to the ONU types of the users who join the multicast group when replicating the multicast data.

Preferably, the data replication module 20 is further used to send the multicast data down to ONUs under an OLT port through a broadcast or multicast logical channel to which a same ONU type corresponds when there are only the same ONU type of users joining the multicast group under the OLT port that corresponds to the multicast group, and, when there coexist different ONU types of users joining the multicast group under an OLT port that corresponds to the multicast group, to send the multicast data respectively to ONUs under the OLT port through broadcast or multicast logical channels to which these ONU types each correspond.

Wherein the ONU types may be classified by rate; for example, in the EPON, the ONU types are classified into a 1G-EPON ONU type and a 10G-EPON ONU type by rate.

Preferably, the device based on the above modules further comprises an entry establishing module 30, which is used to establish information entries, and the information entries may comprise: the corresponding relationships between ONU logical link identifiers and ONU types, the corresponding relationships between ONU logical link identifiers and OLT ports, the corresponding relationships between a multicast group and ONU logical link identifiers, and the corresponding relationships between a multicast group and OLT ports, etc.; accordingly, the data replicating module 20 is further used to determine the users who join the multicast group and their respective ONU types according to the established information entries.

In summary, the present invention achieves efficient multicast processing when different types of ONUs coexist, and enables an ONU to distinguish whether multicast data belongs to an ONU of its type before forwarding multicast, therefore preventing excessive data from unnecessarily interfering with ONUs, meanwhile, efficiently utilizing the bandwidth between an OLT and an ONU, and avoiding meaningless bandwidth occupation by data streams.

What is described above is only preferred embodiments of the present invention, and is not to limit the scope of the present invention.

## Claims

1. A method for multicast processing, comprising:
replicating multicast data to different broadcast or multicast logical channels according to the ONU, Optical Network Unit, types of users who join a multicast group when an OLT, Optical Line Terminal, on which a same port is connected to different types of ONUs, replicates downlink multicast data.

2. The method for multicast processing of claim 1, further comprising:
if there are only the same ONU type of users joining the multicast group under an OLT port that corresponds to the multicast group, sending the multicast data down to ONUs under the OLT port through a broadcast or multicast logical channel to which this ONU type corresponds.

3. The method for multicast processing of claim 1, further comprising:
if there are different ONU types of users joining the multicast group under an OLT port that corresponds to the multicast group, sending the multicast data respectively to ONUs under the OLT port through broadcast or multicast logical channels to which these ONU types each correspond.

4. The method for multicast processing of claim 1, 2 or 3, wherein the ONU types are classified by rate.

5. The method for multicast processing of claim 1, 2 or 3, further comprising:
the OLT determines users who join a multicast group and their respective ONU types according to a variety of information entries established.

6. The method for multicast processing of claim 5, wherein the information entries comprise: the corresponding relationships between ONU logical link identifiers and ONU types, the corresponding relationships between ONU logical link identifiers and OLT ports, the corresponding relationships between a multicast group and ONU logical link identifiers, and the corresponding relationships between a multicast group and OLT ports.

7. A device for multicast processing, applied to an OLT on which a same port is connected to different types of ONUs, the device comprising:
a data receiving module (10) for receiving multicast data; and
a data replicating module (20) for replicating the multicast data to different broadcast or multicast logical channels according to the ONU types of users who join a multicast group when replicating multicast data.

8. The device for multicast processing of claim 7, wherein the data replicating module (20) is further used for, if there are only the same ONU type of users joining the multicast group under an OLT port that corresponds to the multicast group, sending the multicast data down to ONUs under the OLT port through a broadcast or multicast logical channel to which this ONU type corresponds.

9. The device for multicast processing of claim 7, wherein the data replicating module (20) is further used for, if there are different ONU types of users joining the multicast group under an OLT port that corresponds to the multicast group, sending the multicast data respectively to ONUs under the OLT port through broadcast or multicast logical channels to which these ONUs types each correspond.

10. The device for multicast processing of claim 7, 8 or 9, wherein the ONU types are classified by rate.

11. The device for multicast processing of claim 7, 8 or 9, the device further comprising an entry establishing module (30) for the establishment of information entries; wherein the data replicating module (20) is further used for determining users who join a multicast group and their respective ONU types according to the established information entries.

12. The device for multicast processing of claim 11, wherein the information entries comprise: the corresponding relationships between ONU logical link identifiers and ONU types, the corresponding relationships between the ONU logical link identifiers and OLT ports, the corresponding relationships between a multicast group and ONU logical link identifiers, and the corresponding relationships between a multicast group and OLT ports.

## Patentansprüche

1. Verfahren zur Multicast-Verarbeitung, welches das Folgende umfasst:
Vervielfältigen von Multicast-Daten auf verschiedene Sende- oder Multicast-Logikkanäle gemäß den ONU(Optical Network Unit, Optische Netzwerkeinheit)-Benutzertypen, die zu einer Multicast-Gruppe gehören, wenn ein OLT (Optical Line Terminal, Optisches Leitungsendgerät), in welchem derselbe Port mit verschiedenen ONU-Typen verbunden ist, Multicast-Daten der Abwärtsstrecke vervielfältigt.

2. Verfahren zur Multicast-Verarbeitung nach Anspruch 1, welches ferner das Folgende umfasst:
wenn es unter einem OLT-Port, welcher der Multicast-Gruppe entspricht, nur dieselben ONU-Benutzertypen gibt, die zu der Multicast-Gruppe gehören, Senden der Multicast-Daten herab zu den ONUs unter dem OLT-Port durch einen Sende- oder Multicast-Logikkanal, welchem dieser ONU-Typ entspricht.

3. Verfahren zur Multicast-Verarbeitung nach Anspruch 1, welches ferner das Folgende umfasst:
wenn es unter einem OLT-Port, welcher der Multicast-Gruppe entspricht, verschiedene ONU-Benutzertypen gibt, die zu der Multicast-Gruppe gehören, Senden der Multicast-Daten entsprechend an ONUs unter dem OLT-Port durch Sende- oder Multicast-Logikkanäle, welchen diese ONU-Typen jeweils entsprechen.

4. Verfahren zur Multicast-Verarbeitung nach Anspruch 1, 2 oder 3, wobei die ONU-Typen nach der Geschwindigkeit klassifiziert werden.

5. Verfahren zur Multicast-Verarbeitung nach Anspruch 1, 2 oder 3, welches ferner das Folgende umfasst:
Bestimmen von Benutzern, welche zu einer Multicast-Gruppe gehören, und ihren entsprechenden ONU-Typen durch das OLT gemäß einer Vielfalt von errichteten Informationseinträgen.

6. Verfahren zur Multicast-Verarbeitung nach Anspruch 5, wobei die Informationseinträge das Folgende umfassen:
die entsprechenden Beziehungen zwischen ONU-Logikverbindungskennungen und ONU-Typen, die entsprechenden Beziehungen zwischen ONU-Logikverbindungskennungen und OLT-Ports, die entsprechenden Beziehungen zwischen einer Multicast-Gruppe und ONU-Logikverbindungskennungen und die entsprechenden Beziehungen zwischen einer Multicast-Gruppe und OLT-Ports.

7. Vorrichtung zur Multicast-Verarbeitung, die auf ein OLT angewendet wird, in welcher derselbe Port mit verschiedenen ONU-Typen verbunden ist, wobei die Vorrichtung das Folgende umfasst:
ein Datenempfangsmodul (10) zum Empfangen von Multicast-Daten und
ein Datenvervielfältigungsmodul (20) zum Vervielfältigen der Multicast-Daten auf verschiedene Sende- oder Multicast-Logikkanäle gemäß den ONU-Benutzertypen, die zu einer Multicast-Gruppe gehören, wenn Multicast-Daten vervielfältigt werden.

8. Vorrichtung zur Multicast-Verarbeitung nach Anspruch 7, wobei das Datenvervielfältigungsmodul (20), wenn es unter einem OLT-Port, welcher der Multicast-Gruppe entspricht, nur dieselben ONU-Benutzertypen gibt, die zu der Multicast-Gruppe gehören, ferner zum Senden der Multicast-Daten herab zu den ONUs unter dem OLT-Port durch einen Sende- oder Multicast-Logikkanal verwendet wird, welchem dieser ONU-Typ entspricht.

9. Vorrichtung zur Multicast-Verarbeitung nach Anspruch 7, wobei das Datenvervielfältigungsmodul (20), wenn es unter einem OLT-Port, welcher der Multicast-Gruppe entspricht, verschiedene ONU-Benutzertypen gibt, die zu der Multicast-Gruppe gehören, ferner zum Senden der Multicast-Daten entsprechend an ONUs unter dem OLT-Port durch Sende- oder Multicast-Logikkanäle verwendet wird, welchen diese ONU-Typen jeweils entsprechen.

10. Vorrichtung zur Multicast-Verarbeitung nach Anspruch 7, 8 oder 9, wobei die ONU-Typen nach der Geschwindigkeit klassifiziert werden.

11. Vorrichtung zur Multicast-Verarbeitung nach Anspruch 7, 8 oder 9, wobei die Vorrichtung ferner ein Eintragserrichtungsmodul (30) zum Errichten von Informationseinträgen umfasst; wobei das Datenvervielfältigungsmodul (20) ferner zum Bestimmen von Benutzern, die zu einer Multicast-Gruppe gehören, und ihren entsprechenden ONU-Typen gemäß den errichteten Informationseinträgen verwendet wird.

12. Vorrichtung zur Multicast-Verarbeitung nach Anspruch 11, wobei die Informationseinträge das Folgende umfassen: die entsprechenden Beziehungen zwischen ONU-Logikverbindungskennungen und ONU-Typen, die entsprechenden Beziehungen zwischen ONU-Logikverbindungskennungen und OLT-Ports, die entsprechenden Beziehungen zwischen einer Multicast-Gruppe und ONU-Logikverbindungskennungen und die entsprechenden Beziehungen zwischen einer Multicast-Gruppe und OLT-Ports.

## Revendications

1. Procédé pour un traitement de diffusion groupée, comprenant :
la réplication de données de diffusion groupée pour différents canaux logiques de diffusion ou de diffusion groupée selon les types d'unité de réseau optique, ONU, d'utilisateurs qui rejoignent une diffusion groupée lorsqu'un terminal de ligne optique, OLT, sur lequel un même port est raccordé à différents types d'ONU, réplique des données diffusion groupée de liaison descendante.

2. Procédé pour un traitement de diffusion groupée selon la revendication 1, comprenant en outre :
s'il y a seulement le même type d'ONU d'utilisateurs rejoignant le groupe de diffusion groupée sous un port OLT qui correspond au groupe de diffusion groupée, l'envoi des données de diffusion groupée aux ONU sous le port OLT à travers un canal logique de diffusion ou de diffusion groupée auquel ce type d'ONU correspond.

3. Procédé pour un traitement de diffusion groupée selon la revendication I, comprenant en outre :
s'il y a différents types d'ONU d'utilisateurs rejoignant le groupe de diffusion groupée sous un port OLT qui correspond au groupe de diffusion groupée, l'envoi des données de diffusion groupée respectivement aux ONU sous le port d'OLT à travers des canaux logiques de diffusion ou de diffusion groupée auxquels ces types d'ONU correspondent chacun.

4. Procédé pour un traitement de diffusion groupée selon la revendication 1, 2 ou 3, dans lequel les types d'ONU sont classifiés par débit.

5. Procédé de traitement de diffusion groupée selon la revendication 1, 2 ou 3, comprenant en outre :
l'OLT détermine les utilisateurs qui rejoignent un groupe de diffusion groupée et leurs types d'ONU respectives selon une variété d'entrées d'informations établies.

6. Procédé pour un traitement de diffusion groupée selon la revendication 5, dans lequel les entrées d'informations comprennent : les relations correspondantes entre des identifieurs de liaison logique ONU et des types ONU, les relations correspondantes entre des identifieurs de liaison logique ONU et des ports OLT, les relations correspondantes entre un groupe de diffusion groupée et des identifieurs de liaison logique ONU, et les relations correspondantes entre un groupe de diffusion groupée et des ports OLT.

7. Dispositif pour un traitement de diffusion groupée, appliqué à un OLT sur lequel un même port est raccordé aux différents types d'ONU, le dispositif comprenant :
un module de réception de données (10) pour recevoir des données de diffusion groupée ; et
un module de réplication de données (20) pour répliquer les données de diffusion groupée à différents canaux logiques de diffusion ou de diffusion groupée selon les types d'ONU d'utilisateurs qui rejoignent un groupe de diffusion groupée lors de la réplication des données de diffusion groupée.

8. Dispositif pour un traitement de diffusion groupée selon la revendication 7, dans lequel le module de réplication de données (20) est en outre utilisé pour, s'il y a seulement le même type d'ONU d'utilisateurs rejoignant le groupe de diffusion groupée sous un port OLT qui correspond au groupe de diffusion groupée, l'envoi des données de diffusion groupée aux ONU sous le port OLT à travers un canal logique de diffusion ou de diffusion groupée auquel ce type d'ONU correspond.

9. Dispositif pour un traitement de diffusion groupée selon la revendication 7, dans lequel le module de réplication de données (20) est en outre utilisé pour, s'il y a différents types d'ONU d'utilisateurs rejoignant le groupe de diffusion groupée sous un port OLT qui correspond au groupe de diffusion groupée, l'envoi des données de diffusion groupée respectivement aux ONU sous le port OLT à travers les canaux logiques de diffusion ou de diffusion groupée auxquels ces types d'ONU correspondent chacun.

10. Dispositif pour un traitement de diffusion groupée selon la revendication 7, 8 ou 9, dans lequel les types d'ONU sont classifiés par débit.

11. Dispositif pour un traitement de diffusion groupée selon la revendication 7, 8 ou 9, le dispositif comprenant en outre un module d'établissement d'entrée (30) pour l'établissement d'entrées d'informations ; dans lequel le module de réplication de données (20) est en outre utilisé pour déterminer des utilisateurs qui rejoignent un groupe de diffusion et leurs types d'ONU respectifs selon les entrées d'informations établies.

12. Dispositif pour un traitement de diffusion groupée selon la revendication 11, dans lequel les entrées d'informations comprennent : les relations correspondantes entre des identifieurs de liaison logique ONU et les types d'ONU, les relations correspondantes entre les identifieurs de liaison logique ONU et les ports OLT, les relations correspondantes entre un groupe de diffusion groupée et des identifieurs de liaison logique ONU, et les relations correspondantes entre un groupe de diffusion groupée et des ports VOLT.
